(19) Europäisches Patentamt
European Patent Office
Office européen des brevets

(11) Veröffentlichungsnummer: **0 090 278**
**B1**

(12) # EUROPÄISCHE PATENTSCHRIFT

(45) Veröffentlichungstag der Patentschrift: **27.11.85**

(51) Int. Cl.⁴: **C 09 B 5/28,** C 07 D 209/82

(21) Anmeldenummer: **83102651.3**

(22) Anmeldetag: **17.03.83**

(54) **Verfahren zur Herstellung von Anthrimid-Carbazol-Farbstoffen.**

(30) Priorität: **27.03.82 DE 3211328**

(43) Veröffentlichungstag der Anmeldung:
**05.10.83 Patentblatt 83/40**

(45) Bekanntmachung des Hinweises auf die Patenterteilung:
**27.11.85 Patentblatt 85/48**

(84) Benannte Vertragsstaaten:
**CH DE FR GB LI**

(56) Entgegenhaltungen:
**CH - A - 131 593**
**FR - A - 1 553 270**
**FR - A - 2 372 208**
**US - A - 2 167 434**

(73) Patentinhaber: **BAYER AG, Konzernverwaltung RP Patentabteilung, D-5090 Leverkusen 1 Bayerwerk (DE)**

(72) Erfinder: **Hohmann, Walter, Dr., Fontanestrasse 17, D-5090 Leverkusen (DE)**

EP 0 090 278 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung des Farbstoffs der Formel

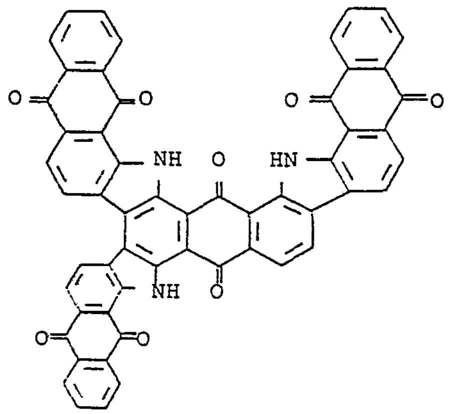

(I)

oder von Farbstoffgemischen, die als Hauptkomponente die Verbindung I enthalten. Das Verfahren ist dadurch gekennzeichnet, dass man das Tetraanthrimid der Formel II

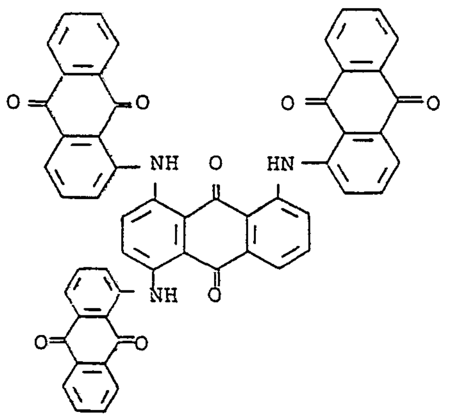

(II)

oder das Tetraanthrimid II als Hauptkomponente enthaltende Anthrimidgemische in Gegenwart einer Pyridinbase und $AlCl_3$ carbazoliert, wobei das Gewichtsverhältnis $AlCl_3$: Tetraanthrimid (oder Anthrimidgemisch) $\leqslant 1:1$ ist.

Es schliesst sich die Aufarbeitung zwecks Isolierung der gebildeten Farbmittel an.

Die Carbazolierung erfolgt vorzugsweise bei etwa 125 bis etwa 150°C.

In das erfindungsgemässe Verfahren werden vorzugsweise solche Anthrimidgemische eingesetzt, die durch Umsetzung von Chlor-anthrachinon-gemischen, die 55-80%, vorzugsweise 65-75% 1,4,5-Trichlor-anthrachinon enthalten, mit 1-Amino-anthrachinon erhalten wurden. Solche Chloranthrachinongemische werden z.B durch Dichlorierung von Anthrachinon-1-sulfonsäure und anschliessenden Sulfo-Chlor-Austausch erhalten (Fischerung). Vorzugsweise werden sie jedoch durch Dichlorierung eines Nitro-anthrachinon-Gemisches, das mindestens 70% 1-Nitroanthrachinon enthält, und anschliessenden Nitro-Chlor-Austausch erhalten. Die Dichlorierungen können nach an sich bekannten Methoden, bei Einsatz von Anthrachinon-1-sulfonsäure z.B. nach der DE-PS 216071 (Friedländer IX, 677), bei Einsatz von Nitro-anthrachinon z.B. nach DE-PS 1161252 erfolgen.

Der Farbstoff der Formel I ist bekannt. Verschiedene Herstellungsverfahren sind beschrieben worden u.a. auch ausgehend von 1,4,5-Trichloranthrachinon in der US-PS 2167434. Die Carbazolierung des gebildeten Tri-α-anthrachinonyl-amino-anthrachinon (kurz Tetraanthrinid genannt) erfolgte stets mit $AlCl_3$, meist unter Salzzusatz, aber auch in Pyridin. Dabei werden grosse mengen $AlCl_3$ benötigt, in der US-PS die 8-15 fache gewichtsmenge bezogen auf eingesetztes Tetraanthrimid.

In der DE-OS 1813729 wird in Pyridin gearbeitet. Bei den Einsatzmateralien wird auch das Anthrimid der Formel II genannt. Als besonderer Vorteil des Verfahrens gegenüber dem Stand der Technik wird der geringe $AlCl_3$-bedarf hervorgehoben. Bevorzugt wird dabei das Arbeiten mit $AlCl_3$/Pyridin in inerten organischen Lösungsmitteln.

In den Beispielen, in denen nur mit pyridin, aber ohne weiteres organisches Lösungsmittel gearbeitet wird, wird immer noch 3 bis 4 mal so viel $AlCl_3$ gebraucht wie bei unserem Verfahren. Selbst bei Einsatz von inerten Lösungsmitteln wird günstigstenfalls, nämlich in Beispiel 10, dennoch fast die doppelte Menge $AlCl_3$ gebraucht. Da der Pyridinbedarf bei vorgegebener Reaktionstemperatur in festem Verhältnis zum $AlCl_3$-Einsatz steht, wird nach unserem Verfahren eine vielfach bessere Raum-Zeit-Ausbeute erreicht als dies nach dem genannten Verfahren der Fall sein kann.

Im übrigen wird in Beispiel 10 der DE-A-1813729 als Ausgangsprodukt für die Carbazolierung ein trianthrimid eingesetzt, an das zwei heterocyclische Ringe ankondensiert sind. Strukturell besteht somit keinerlei Verwandschaft zum erfindungsgemäss eingesetzten Tetraanthrimid.

Die FR-A-2372208 behandelt die Carbazolierung von Trianthrimiden, die durch zwei Chloratome und gegebenenfalls Benzoylamino substituiert sind; die Literaturstelle enthält keinen Hinweis auf die Carbazolierung von unsubstituiertem Tetraanthrimid.

Obwohl der CH-A.131593 die Aufgabe zugrunde lag, die Carbazolierung von Dianthrachinolylaminen mit möglichst geringen $AlCl_3$-Mengen auszuführen, gelingt es gemäss keinem der Beispiele, mit einem Gewichtsverhältnis $AlCl_3$: Anthrimid $< 1$ zu arbeiten.

Ein weiterer Vorteil ist die wesentlich geringere Abwasserlast pro kg Farbstoff, da die Menge des Abwassers ebenfalls in einem nur wenig flexiblen Verhältnis zur eingesetzten $AlCl_3$-Menge steht.

Der Vorteil der Carbazolierung des Tetraanthrimids der Formel II nach unserem Verfahren ist also offensichtlich.

Die bevorzugte Ausführungsform des beanspruchten Verfahrens zur Herstellung des farbstoffs I durch Umsetzung von Chlor-anthrachinon-Gemischen, die 55-80%, vorzugsweise 65 bis 75% 1,4,5-Trichloranthrachinon enthalten, mit 1-Amino-anthrachinon und anschliessende Carbazolierung hat weitere Vorteile gegenüber dem

Stand der Technik, insbesondere dann, wenn das Chloranthrachinongemisch durch Dichlorierung von Nitro-anthrachinon und anschliessenden Nitro-Chlor-Austausch gewonnen wurde.

Bei diesen Verfahren ist wesentlich, dass auf eine Zwischenreinigung der Farbstoffvorstufen verzichtet werden kann; bei der Isolierung werden lediglich die Lösungsmittel entfernt. Auch ist es nicht nötig, den erhaltenen Farbstoff zu reinigen wie es üblicherweise nach der Carbazolierung durch oxidative Nachbehandlung (Schönung) erfolgt.

Bezogen auf 1-Nitro-anthrachinon erhält man nach dem erfindungsgemässen Verfahren den Farbstoff I in einer Ausbeute, die der Theorie nahekommt (ca. 90% oder darüber).

Verglichen mit der Arbeitsweise gemäss der US-PS 2167434 ergeben sich folgende Vorteile:

a) Es kann von einem stark verunreinigten 1,4,5-Trichloranthrachinon ausgegangen werden wie es z.B. bei den obengenannten Verfahren anfällt;

b) die kostspielige Lösungsmittelaufarbeitung (Filtration, Wäsche mit zwei verschiedenen Lösungsmitteln, Trocknung) kann entfallen;

c) es wird eine wesentlich konzentriertere Arbeitsweise durch ein kleineres Lösungsmittel/Anthrimid-Verhältnis ermöglicht.

Es muss weiterhin als überraschend angesehen werden, dass trotz Einsatz so stark verunreinigter Zwischenprodukte die erhaltenen Farbstoffe hinsichtlich Farbstärke und Echtheiten etwa denjenigen entsprechen, die bei Einsatz der reinen Zwischenprodukte, z.B. nach Beispiel 1 der US-PS 2167434, erhalten werden.

Auch die Farbausbeute (Produkt aus Farbstoffmenge und Farbstärke der damit erzielten Färbung, bezogen auf einen Standardtyp) ist nach dem erfindungsgemässen Verfahren bei Einsatz von Chloranthrachinongemischen höher als aufgrund des 1,4,5-Trichlor-anthrachinon-Gehalts nach den Ergebnissen von versuchen mit reiner Trichlorverbindung zu erwarten ist.

Ein weiterer Vorteil der Verfahrensweise zur Herstellung des Farbstoffs I bzw. von Gemischen ausgehend von 1-Nitro-anthrachinon ist die Möglichkeit, die Herstellung von Trichloranthrachinon und die Tetraanthrimidschmelze zu einem Eintopfverfahren zusammenzufassen, ohne Lösungsmittel als Backschmelze, mit Lösungsmittelzusatz im Anschluss an die Schmelzchlorierung in einem Rührwerksbehälter. Auf Anthrachinonsulfonsäure ist dieses Verfahren nicht anwendbar.

Da in allen Zwischenstufen ohne Anfall von Abwasser gearbeitet werden kann, ergeben sich auch ökologische Vorteile beispielsweise gegenüber der Herstellung der Zwischenstufen auf Basis der Sulfonsäure. Die starke Reduzierung der Abwässer bei der Carbazolierung ist natürlich auch hier gegeben.

Im folgenden wird das beanspruchte Verfahren in seiner bevorzugten Form beispielhaft erläutert:

Die Dichlorierung von 1-Nitroanthrachinon erfolgt nach der Verfahrensweise der DE-PS 1161252. Dazu lässt man bei Raumtemperatur bis leicht erhöhter Temperatur in Chlorsulfonsäure oder vorzugsweise Oleum Chlor einwirken unter lebhafter Durchmischung von gasförmiger und flüssiger Phase und zwar in Gegenwart eines üblichen Chlorierungskatalysators wie $FeCl_3$, $SbCl_5$, S, Schwefelchloride, Jod-Chlorverbindungen, vorzugsweise aber Jod in gelöster oder fein dispergierter Form. Bei Einsatz von Oleum ist die $SO_3$-Menge so zu bemessen, dass aller in der Reaktion gebildeter Chlorwasserstoff in $ClSO_3H$ überführt werden kann. Dabei treten die Chloratome vorzugsweise in die α-Stellung der nicht substituierten Seitenringe ein und zwar um so selektiver, je niedriger die $SO_3$-Konzentration während der Reaktion gehalten wird. Die Isolierung der Chlorierungsprodukte kann durch Verpasten auf überschüssiges Wasser, vorzugsweise aber durch Herunterstellen der Schwefelsäurekonzentration durch Zusatz von Wasser oder wasserhaltiger Schwefelsäure erfolgen. Bereits bei einer Verdünnung auf 70-89%ige Säure sind dabei alle Chlorierungsprodukte ausgefallen. Die hohen Säurekonzentrationen der Mutterlaugen ermöglichen die Rückgewinnung wieder einsatzfähiger $H_2SO_4$ mit geringerem Kostenaufwand als dies bei stark wasserhaltiger $H_2SO_4$ die bei der Verpastung entsteht, der Fall ist. Auf diese Art lässt sich ein 1-Nitro-5,8-dichlor-anthrachinon mit einem reinen Gehalt von maximal 80% erhalten.

Statt 1-Nitro-anthrachinon handelsüblicher Reinheit (>97%) kann man in wirtschaftlich vorteilhafter Weise rohes oder teilgereinigtes 1-Nitroanthrachinon, dessen Herstellung z.B. in der DE-OS 2740889 beschrieben ist, einsetzen. Man bekommt dann allerdings Nitro-dichloranthrachinon-Gemische, die zu weniger als 70% aus 1-Nitro-5,8-dichlor-anthrachinon bestehen, aber mit 1-Amino-anthrachinon auf dem beanspruchten Verfahrensweg ebenfalls gute farbstoffe ergeben.

Der Nitro-Chlor-Austausch im 1-Nitro-5,8-dichlor-anthrachinon erfolgt nach der Methode, die in der DE-OS 2740889 beschrieben ist, und zwar durch Einwirkung von Chlor auf geschmolzenes rohes 1-Nitro-5,8-dichloranthrachinon bei 230 bis 250° C, vorzugsweise 240° C mit Hilfe spezieller Begasungsrührer, mit deren Hilfe eine innige Durchmischung der Reaktanden gewährleistet wird. Der Austausch erfolgt zügig, weitgehend unabhängig von der Konstitution der einzelnen Nitro-Verbindungen. Dabei lassen sich die Nitro-Gruppen weitgehend austauschen, ohne dass in nennenswertem Umfang Kernchlorierung stattfindet. Der oxidative Abbau von Anthrachinon, vor allem von unsubstituiertem Anthrachinon ist aber nicht vollständig zu vermeiden. Diese nicht anthrachinoiden Bestandteile stören aber die weitere Farbstoffherstellung nicht.

Man kann natürlich auch den Austausch unter Zusatz geeigneter Lösungs- bzw. Verdünnungsmittel, wie sie in der Literatur beschrieben worden sind, z.B. Phthalsäureanhydrid, Trichlorbenzol, Naphtalin oder anorganischen Salzen bewerkstelligen.

Nach beendeter Reaktion entgast man die Schmelze durch geeignete Massnahmen, z.B.

Ausblasen mit Inertgasen, lässt die Schmelze in geeigneten Behältnissen erstarren, z.B. in einer Kristallisierschnecke.

Man kann aber auch nach Zugabe der entsprechenden Agentien nach Art einer Backschmelze in dafür geeigneten Apparaten oder nach Zusatz geeigneter Lösungsmittel vorzugsweise Nitrobenzol gleich die Anthrimidschmelze anschliessen.

Im so gewonnenen Trichlor-anthrachinongemisch beträgt der Gehalt an 1,4,5-Trichlor-anthrachinon bei Einsatz von reinem 1-Nitro-anthrachinon zwischen 70 und 80%, bei Einsatz von rohem oder teilgereinigten 1-Nitro-anthrachinon (1-Nitroanthrachinon-Gehalt 70 bis 90%) in die Chlorierung zwischen 55 und 70%.

Die so gewonnenen Trichlor-anthrachinongemische setzt man nach den Regeln einer Anthrimidschmelze mit für den Austausch aller Chloratome ausreichenden Mengen an 1-Amino-anthrachinon um. Bevorzugt setzt man 1-Amino-anthrachinon handelsüblicher Qualität (Reingehalt >96%) ein. Man kann aber auch Rohprodukte einsetzen, wie sie durch Reduktion von rohem oder teilgereinigtem 1-Nitroanthrachinon z.B. nach der DE-OS 2740889 erhalten werden können und Gehalte zwischen 70 und 90% an 1-Amino-anthrachinon besitzen. Ein solches Aminoanthrachinon-Gemisch lässt sich mit gutem Ergebnis mit 1,4,5-Trichlor-anthrachinongemischen mit Gehalten zwischen 55 und 80% umsetzen. Jedoch wird bevorzugt ein Gemisch mit hohen (niedrigem) 1,4,5-Trichloranthrachinongehalt und niedrigem (hohem) 1-Amino-anthrachinongehalt kombiniert. Natürlich kann man auch beide Einsatzprodukte mit hohem Gehalt kombinieren. Die Ergebnisse werden aber merklich schlechter bei Kombinationen von niedrigem mit niedrigem Gehalt. Das molare Verhältnis der Komponenten zueinander ist nicht besonders kritisch. Optimale Ergebnisse bei der farbstoffsynthese werden aber erzielt, wenn man soviel Aminoanthrachinon zusetzt, dass nach der Reaktion noch kleine Überschüsse (ca. 3-7%, bezogen auf Gesamtfarbstoff) vorhanden sind. Dieses optimale Verhältnis ist von Fall zu Fall zu ermitteln und beträgt zwischen 2,7 und 3,3 Mol Amino-anthrachinon, bezogen auf das mittlere Molgewicht des Trichlor-anthrachinons, das sich aus dem analytischen Chlorgehalt ermitteln lässt. Wie bei jeder Anthrimidschmelze sind auch hier übliche Katalysatoren, vorzugsweise Kupfer und Kupfersalze sowie Salzsäurefänger, wie die Acetate, Carbonate, oxide oder Hydroxide der Alkali- oder Erdalkalimetalle notwendig. Vorzugsweise verwendet man Kupfer-(I)-chlorid oder basisches Kupferchlorid sowie Soda. Bei den Kupfersalzen reichen Bruchteile eines prozents, bezogen auf gebildetes Anthrimid, aus. Als Sodamenge werden bevorzugt 130 bis 150% der Theorie, bezogen auf die stöchiometrisch maximal mögliche HCl-Bildung eingesetzt. Besonders gute Ergebnisse werden erzielt, wenn der Katalysatorzusatz auf die gesamte Reaktionszeit verteilt erfolgt. So kommt man mit einem Minimum aus und gewinnt Farbstoffe mit besonders niedrigem Kupfergehalt, der durch eine saure Wäsche im Zuge der Aufarbeitung weiter vermindert werden kann. Die Anthrimidschmelzen zeigen in ihrer Konsistenz ein ungewöhnlich günstiges Verhalten. Bei Nitrobenzol – dem bevorzugten Lösungsmittel – genügt ein verdünnungsverhältnis von Nitrobenzol/Anthrimid von 3:1 um in einem Rührwerksbehälter eine technologisch und chemisch einwandfreie Handhabung der Reaktion zu gewährleisten. Die erforderlichen Reaktionszeiten liegen zwischen 4 und 10 h, die Temperaturen in Nitrobenzol zwischen 205°C und Siedetemperatur. Die Isolierung kann nach beliebigen Methoden erfolgen. Aus ökonomischen und ökologischen Gründen ist die Isolierung durch Verdampfen des Lösungsmittels vorzugsweise unter vermindertem Druck in dafür geeigneten Apparaturen, z.B. einem Schaufeltrockner, bevorzugt. Dabei fallen die Anthrimide verunreinigt mit anorganischen Salzen (z.B. NaCl und Soda bei Einsatz von Soda als HCl-Fänger) an. Man kann vor der Carbazolierung die Salze daraus durch Wasserbehandlung entfernen, jedoch ist das nicht erforderlich, da sich auch die salzhaltigen Produkte ohne Nachteile direkt carbazolieren lassen. Die Reaktion gelingt um so besser, je feiner verteilt die Anthrimide eingesetzt werden. Für die Carbazolierungsreaktion stellt man das Carbazolierungsagens durch Eintragen von $AlCl_3$ in aromatische Stickstoffbasen in bekannter Art und Weise her. Als aromatische Stickstoffbasen kommen in erster Linie Pyridine in frage, wie Pyridin selbst sowie seine Methylderivate wie 2-Methyl- und 3-Methylpyridin, technisch üblicherweise als pyridin 1, 2 oder 3 bezeichnet. Auch deren Gemische können vorteilhaft eingesetzt werden. Aus ökonomischen Gründen werden bevorzugt die Methylpyridine verwendet, da sie einmal wesentlich preisgünstiger erhältlich sind als pyridin selbst und zum anderen die Verlustrate bei der Aufarbeitung geringer ist und kein Nachteil gegenüber Pyridin beobachtet wird. Die Reaktionstemperatur beträgt vorzugsweise etwa 125 bis etwa 150°C, besonders bevorzugt 135 bis 140°C.

Aus ökologischen und Ökonomischen Gesichtspunkten sollte das Verhältnis $AlCl_3$/Anthrimid möglichst klein sein. Es liegt beim beanspruchten Verfahren bevorzugt unter 1 und ist damit viel kleiner als bei allen bisher beschriebenen Methoden zur Herstellung der Verbindungen der Formel (I). Selbst mit einem Verhältnis von 0,6 können noch einwandfreie Ergebnisse erreicht werden; im allgemeinen werden Verhältnisse von 0,7 bis 0,9 gewählt.

Die Verhältnisse $AlCl_3$/Pyridin werden bei Einsatz von Pyridn durch die gewählte Reaktionstemperatur festgesetzt und betragen bei 135 bis 140°C ca. 1:1,5, bei pyridin 2 und 3 wendet man Verhältnisse zwischen 1,5 und 3 an in Abhängigkeit von der Konsistenz bei der Reaktion (Rührfähigkeit der Schmelzen).

Die Reaktionszeiten liegen zwischen 30 min und 4 h, vorzugsweise zwischen 1 und 2 h. Die Aufarbeitung erfolgt nach an sich bekannten Methoden. Wegen des amphoteren Charakters der Aluminiumverbindungen kann man sie sowohl in

stark saurem wie stark alkalischem Bereich in Lösung halten oder bringen. Bevorzugt ist der alkalische Bereich – 5 bis 12%ige Natronlauge, insbesondere 8 bis 10%ige Natronlauge ist bevorzugt – da die aus ökonomischen Gründen unbedingt notwendige Rückgewinnung der Basen leichter ist, z.B. durch Wasserdampfdestillation.

Die so erhaltenen Farbstoffe können einer üblichen oxidativen Nachbehandlung unterzogen werden, z.B. im alkalischen Bereich mit Chlorlauge oder im sauren Bereich mit Chromaten, Chlor, Brom oder chlorabgebenden Mitteln. Im allgemeinen ist eine solche Nachbehandlung nicht erforderlich, um optimale Farbausbeute und optimales Echtheitsniveau zu erhalten. Ökonomische und ökologische Gesichtspunkte sprechen gegen eine solche Nachbehandlung.

Die erhaltenen Farbstoffe stellen farbstarke küpenfarbstoffe mit hohem Echtheitsniveau dar. Dank ihrem guten Dispergierverhalten und ihren ausgezeichneten färberischen Eigenschaften sind sie universell für praktisch alle Färbeverfahren einsetzbar.

Die in den folgenden Beispielen angegebenen Teile sind, wenn nicht ausdrücklich anders bezeichnet, Gewichtsteile; die Temperaturangaben sind in °C. Die analytischen Zusammensetzungen basieren auf Hochdruckflüssigkeits- und quantitativer Dünnschichtchromatographie.

*Beispiel 1:*

a) 44 l trockenes Nitrobenzol werden in einem 100 l Rührwerkskessel vorgelegt. Unter Rühren werden 5 kg 1,4,5-Trichlor-anthrachinon der Zusammensetzung

72,4% 1,4,5-Trichlor-anthrachinon
2,8% 1,4,6-Trichlor-anthrachinon
4,0% 1-Chloranthrachinon
0,2% 2-Chloranthrachinon
1,5% 1,5-Dichloranthrachinon
1,0% 1,6-Dichloranthrachinon
0,8% 1,7-Dichloranthrachinon
1,1% 1,8-Dichloranthrachinon
0,9% 1,4,5,8-Tetrachlor-anthrachinon sowie ca. 5% nicht-getrennter sonstiger Trichloranthrachinone (Rest unbekannt)

sowie 11,44 kg 1-Amino-anthrachinon (Reingehalt 97,7%) und 3,84 kg Soda eingetragen. Man heizt in 3,5 h auf 205°C, dabei werden ab 165°C 0,06 kg Kupfer-(I)-chlorid zugesetzt. Nach Erreichen von 205°C wird noch 1,5 h bei 205°C unter Abdestillieren der Hauptmenge des Reaktionswassers gehalten und abschliessend 6 h bei 210 bis 213°C nachgerührt. Die Schmelze wird nun in einen 100 l Venuleth überführt und bei einer Heiztemperatur von 140 bis 150°C bei ca. 30 mmHg zur Trockene eindestilliert. Nach dem erkalten wird das Produkt ausgerührt. Erhalten werden 19,2 kg.

b) 40 l eines Gemischs aus α- und β-Methylpyridin werden in einem 100 l Kessel vorgelegt. Unter Rühren werden innerhalb 1 h 13 kg $AlCl_3$ unterhalb 120°C einigetragen, anschliessend innerhalb 30 min 19,2 kg des nach a) erhaltenen Produktes eingetragen, die Temperatur auf 135 bis 137°C angehoben und am Rückfluss bei dieser Temperatur 1,5 bis 2 h gehalten. In einem Aufarbeitungskessel werden ca. 350 kg 10%ige Natronlauge vorgelegt, die heisse Reaktionsschmelze in ca. 3o min unter Rühren eingetragen und solange mit Wasserdampf destilliert, bis alles pyridin abgetrieben ist. Dabei wird dafür gesorgt, dass der Füllstand des Kessels sich nicht wesentlich ändert.

Die vorliegende Farbstoffsuspension wird über eine Filterpresse filtriert, gewaschen, anfänglich mit verdünnter Natronlauge, später mit heissem Wasser, bis ein pH-Wert von ca. 9 im Ablauf erreicht ist. Man presst scharf ab und erhält 20,6 kg Presskuchen mit einem farbstoffgehalt von 15,2 kg. Nach üblicher Formierung und Sprühtrocknung wird daraus ein Farbstoff erhalten, der Baumwolle nach allen Färbemethoden farbstark und hervorragend echt in Khakitönen färbt.

c) Das in a) eingesetzte rohe Trichloranthrachinon wird erhalten durch Schmelzchlorierung nach der in der DE-OS 2740889 beschriebenen Arbeitsweise aus geschmolzenem 1-Nitro-5,8-dichloranthrachinon durch Chlorbegasung bei 240 bis 250°C (Dauer ca. 5 bis 6 h). Nach Ausblasen von restlichen nitrosen Gasen und überschüssigem Stickstoff lässt man die Schmelze auslaufen und kristallisieren. Aus 56 kg Einsatz werden 51 bis 52 kg erhalten. Chlorgehalt 33 bis 34,5%.

d) Das in c) eingesetzte 1-Nitro-5,8-dichloranthrachinon erhält man durch Einwirkung von Chlor auf eine Lösung von 1-Nitroanthrachinon in ca. 20%-igem Oleum unter Zusatz von Jod als Katalysator bei lebhafter Durchwirbelung und einer Temperatur unter 35°C. Die Isolierung kann durch Verpasten oder Herunterstellen aus $H_2SO_4$ erfolgen. Aus 9,5 kg 1-Nitroanthrachinon (ca. 98%ig) werden 11,5 kg mit einem Chlorgehalt von 22% erhalten.

*Beispiel 2:*

a) Man arbeitet wie in Beispiel 1a), setzt aber anstelle von 11,44 kg 1-Aminoanthrachinon (97,7%ig) 11,7 kg eines Aminoanthrachinons der Zusammensetzung

86,7% 1-Amino-anthrachinon
1,9% 1,5-Diaminoanthrachinon
1,2% 1,8-Diaminoanthrachinon
0,9% 1,6-Diaminoanthrachinon
1,2% 1,7-Diaminoanthrachinon
1,4% 2-Aminoanthrachinon
2,9% Anthrachinon

ein (erhalten nach DE-OS 2740889, Beispiel 5b)). Erhalten werden 19,1 kg Produkt.

b) Man arbeitet wie in Beispiel 1b) beschrieben, setzt aber eine gleich grosse Gewichtsmenge des nach Beispiel 2a) erhaltenen Anthrimidgemisches ein und ersetzt das Methylpyridingemisch durch eine gleiche Menge Pyridin, stellt durch Abdestillieren von pyridin eine Reaktionstemperatur von 135 bis 137°C ein, hält 2 h bei dieser Temperatur und arbeitet wie beschrieben auf. Nach dem Abdestillieren des pyridins kühlt man auf 65 bis 70°C ab und setzt soviel Chlorlauge zu, dass nach 2 h Nitritpapier noch gebläut wird. Dazu sind etwa 20 l erforderlich.

Man nimmt restliches Chlor mid der eben nötigen Bisulfitmenge weg, presst heiss in eine Filterpresse ein und wäscht wie in Beispiel 1.

Der erhaltene Farbstoff färbt Baumwolle nach allen Färbemethoden in sehr ähnlichem Ton wie der nach Beispiel 1 erhaltene. Die Echtheiten beider Färbungen sind praktisch gleich.

*Beispiel 3:*

a) Man arbeitet wie in Beispiel 1a) beschrieben, setzt aber anstelle von 11,44 kg 1-Aminoanthrachinon 12,3 kg eines Aminoanthrachinons der Zusammensetzung
72,5% 1-Amino-anthrachinon
3,1% 1,5-Diaminoanthrachinon
2,8% 1,8-Diaminoanthrachinon
3,0% 1,6-Diaminoanthrachinon
3,1% 1,7-Diaminoanthrachinon
2,3% Anthrachinon
5,9% 2-Aminoanthrachinon
0,1% 2,6- + 2,7-Diaminoanthrachinon
ein (erhalten nach DE-OS 2740889, Beispiel 1b)), hält das Gemisch aber 10 h bei 210 bis 213°C und setzt nach 5 und 7,5 h jeweils 0,02 kg Kupfer-(I)-chlorid nach. Die Aufarbeitung wird wie folgt geändert:

Man treibt das Lösungsmittel in einem Verdünner mit Wasserdampf ab, filtriert siedenheiss in einer Filterpresse und wäscht mit reichlich heissem Wasser neutral und salzfrei. Der Presskuchen wird im Umluftschrank bei 100 bis 120°C getrocknet. Erhalten werden 15,4 kg Produkt.

b) Das nach a) erhaltene Produkt wird analog Beispiel 1b) carbazoliert, die Endtemperatur aber auf 140 bis 145°C eingestellt und wie beschrieben aufgearbeitet. Man erhält 15 kg eines Farbstoffes, der Baumwolle aus warmer Küpe etwas braunstichiger färbt als der nach Beispiel 1b) erhaltene.

c) Wird der nach b) erhaltene Farbstoff analog Beispiel 2b) mit Chlorlauge nachbehandelt, so wird die Nuance etwas gelber, aber nur wenig klarer.

*Beispiel 4:*

Man arbeitet wie in Beispiel 1a) und Beispiel 1b) beschrieben, setzt aber ein Trichloranthrachinon ein, das aus rohem 1-Nitroanthrachinon der Zusammensetzung
75,6% 1-Nitroanthrachinon
6,7% 2-Nitroanthrachinon
3,0% 1,6-Dinitroanthrachinon
3,8% 1,7-Dinitroanthrachinon
3,8% 1,5-Dinitroanthrachinon
3,4% 1,8-Dinitroanthrachinon
0,6% 2,7- + 2,8-Dinitroanthrachinon
2,0% Anthrachinon (erhalten nach DE-OS 2740889, Beispiel 2c))
durch Dichlorierung und nachfolgenden Nitrochloraustausch gemäss den Beispielen 4a) und 4b) erhalten worden ist.

Der erhaltene Farbstoff färbt Baumwolle nach allen Methoden in einem stark braunstichigen Khaki. Der Farbton kann durch Schönung in 2%iger Schwefelsäuresuspension bei 60 bis 65°C mittels Chlor mit klarer Nuance erhalten werden. Dabei findet Anchlorierung statt. Chlorgehalt vorher 1,2%; nachher 2,7%.

a) 11,4 l Schwefelsäure (96%ig) und 18,9 l Oleum (20%ig) werden vorgelegt, darin 9,5 kg des rohen Nitroanthrachinons gelöst, 0,2 kg Jod zugegeben, der Kessel bei stillstehemdem Rührer auf ca. 200 mm evakuiert, das Vakuum mit Chlor aufgefüllt und der Kesselinhalt bei geschlossenem Kessel unter leichter Wasserkühlung bei 28 bis 30°C kräftig turbiniert. Das verbrauchte Chlor wird kontinuierlich ersetzt. Nachdem 3,9 kg Chlor aufgenommen sind, wird die Chlorzufuhr abgestellt und solange nachgerührt, bis ein leichter Unterdruck im Kesselentstanden ist. Nun dosiert man bei geschlossenem Kessel 8 l 20%iges Oleum zu, setzt nochmals 0,05 kg Jod nach und drückt unter lebhaftem Turbinieren solange Chlor nach, bis die Chloraufnahme zum Stillstand kommt. Das ist nach etwa 1,4 kg der Fall. Man öffnet den Kessel, vertreibt überschüssiges Chlor aus dem Gasraum mittels Stickstoff, trägt auf ca. 300 kg eines Eis/Wasser-Gemisches (1:1) aus, stumpft Chlor mit Bisulfit ab. Man presst in einer Filterpresse ab, wächst mit Wasser neutral (ca. 600 l erforderlich), bläst trocken und trocknet bei 110°C.

b) Das nach a) erhaltene Produkt wird durch Schmelzchlorierung bei 230 bis 240°C nach der Methode der DE-OS 2740889 in ein Gemisch folgender Zusammensetzung umgewandelt:
60,8% 1,4,5-Trichlor-anthrachinon
7,8% 1,4,6-Trichlor-anthrachinon
3,1% 1,6-Dichloranthrachinon
3,0% 1,7-Dichloranthrachinon
3,7% 1,5-Dichloranthrachinon
3,2% 1,8-Dichloranthrachinon
2,1% 1,4,5,8-Tetrachloranthrachinon
0,4% 1- + 2-Chloranthrachinon
<0,3% 1-Nitroanthrachinon
sowie weitere nicht getrennte Di-, Tri- und Tetrachloranthrachinone.

## Patentansprüche

1. Verfahren zur Herstellung des Farbstoffs der Formel

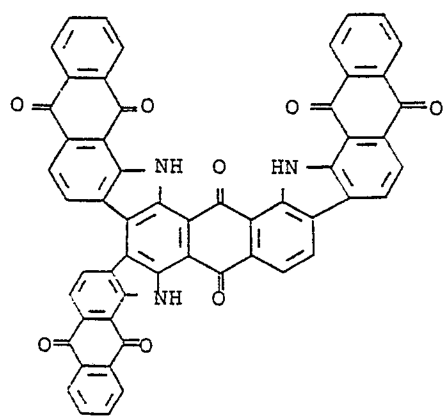

(I)

oder von Stoffgemischen, die als Hauptkomponente die Verbindung (I) enthalten, dadurch gekennzeichnet, dass man das Tetraanthrimid der Formel

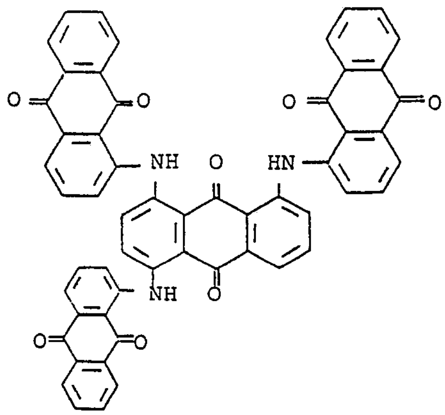

(II)

oder das Tetraanthrimid II als Hauptkomponente enthaltende Anthrimidgemische in Gegenwart einer Pyridinbase und $AlCl_3$ carbazoliert, wobei das Gewichtsverhältnis $AlCl_3$:Tetraanthrimid oder Anthrimid-gemisch ≤ 1:1 ist.

2. Verfahren gemäss Anspruch 1, dadurch gekennzeichnet, dass das Gewichtsverhältnis $AlCl_3$:Tetraanthrimid oder Anthrimidgemisch 0,6 bis 1:1, vorzugsweise 0,7 bis 0,9:1 ist.

3. Verfahren gemäss Ansprüchen 1 bis 2, dadurch gekennzeichnet, dass man bei etwa 125 bis etwa 150°C carbazoliert.

4. Verfahren gemäss den Ansprüchen 1 bis 3, dadurch gekennzeichnet, dass man solche Anthrimidgemisch einsetzt, die durch Umsetzung von Chloranthrachinongemischen, die 55 bis 80%, vorzugsweise 65 bis 75% 1,4,5-Trichlor-anthrachinon enthalten, mit 1-Aminoanthrachinon erhalten wurden.

5. Verfahren gemäss Anspruch 4, dadurch gekennzeichnet, dass man Chloranthrachinon-Gemische einsetzt, die durch Dichlorierung eines Nitroanthrachinon-Gemisches, das mindestens 70% Nitroanthrachinon enthält und anschliessenden Nitro-Chlor-Austausch erhalten wurden.

6. Verfahren gemäss Anspruch 4, dadurch gekennzeichnet, dass die eingesetzten Chloranthrachinongemische durch Dichlorierung von Anthrachinon-1-sulfonsäure und anschliessenden Sulfo-Chlor-Austausch erhalten wurden.

## Claims

1. Process for the preparation of the dyestuff of the formula

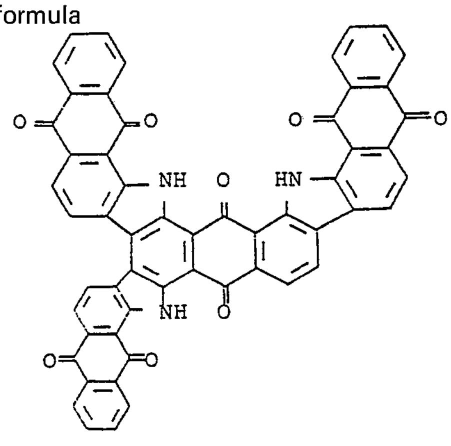

(I)

or mixtures of substances which contain compound (I) as the main component, characterised in that the tetraanthrimide of the formula

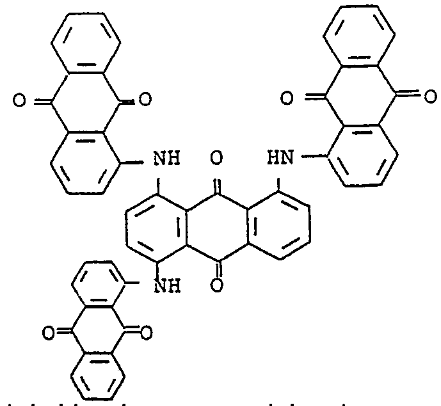

(II)

or anthrimide mixtures containing the tetraanthrimide II as the main component is/are carbazolated in the presence of a pyridine base and $AlCl_3$, the weight ratio of $AlCl_3$:tetraanthrimide or the anthrimide mixture being ≤ 1:1.

2. Process according to Claim 1, characterised in that the weight ratio of $AlCl_3$:tetraanthrimide or the anthrimide mixture is 0.6 to 1:1, preferably 0.7 to 0.9:1.

3. Process according to Claims 1 to 2, characterised in that the carbazolation is carried out at about 125 to about 150°C.

4. Process according to Claims 1 to 3, characterised in that such anthrimide mixtures are used which have been obtained by reacting chloroanthraquinone mixtures containing 55 to 80%, preferably 65 to 75% of 1,4,5-trichloro-anthraquinone, with 1-aminoanthraquinone.

5. Process according to Claim 4, characterised in that chloroanthraquinone mixtures are used which have been obtained by dichlorination of a nitroanthraquinone mixture which contains at least 70% of nitroanthraquinone, and subsequent nitro-chlorine exchange.

6. Process according to Claim 4, characterised in that the chloroanthraquinone mixtures used have been obtained by dichlorination of anthraquinone-1-sulphonic acid and subsequent sulpho-chlorine exchange.

## Revendications

1. Procédé de production du colorant de formule

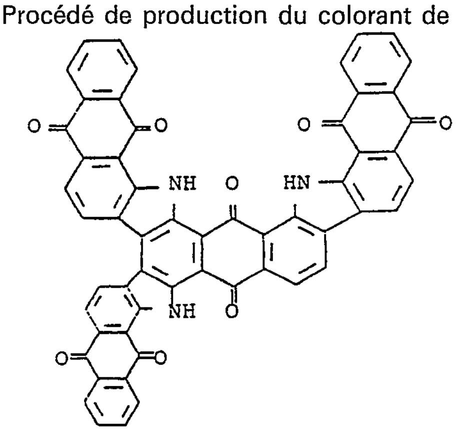

(I)

ou de mélanges de produits qui contiennent comme composant principal le composé (I), caractérisé en ce qu'on carbazole le tétra-anthrimide de formule

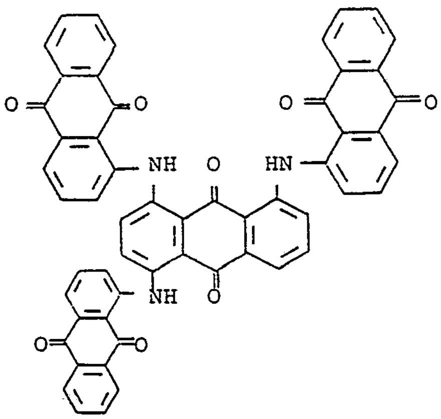

(II)

ou des mélanges d'anthrimides contenant le tétra-anthrimide II comme composant principal en présence d'une base pyridique et de $AlCl_3$, le rapport en poids $AlCl_3$:tétra-anthrimide ou mélange d'anthrimides étant inférieur ou égal à 1:1.

2. Procédé suivant la revendication 1, caractérisé en ce que le rapport en poids $AlCl_3$:tétra-anthrimide ou mélange d'anthrimides a une valeur de 0,6 à 1:1, de préférence de 0,7 à 0,9:1.

3. Procédé suivant les revendications 1 et 2, caractérisé en ce qu'on effectue la carbazolation à une température d'environ 125 à environ 150°C.

4. Procédé suivant les revendications 1 à 3, caractérisé en ce qu'on utilise des mélanges d'anthrimides qui ont été obtenus par réaction avec la 1-amino-anthraquinone de mélanges de chloranthraquinones qui contiennent 55 à 80% de préférence 65 à 75%, de 1,4,5-trichloranthraquinone.

5. Procédé suivant la revendication 4, caractérisé en ce qu'on utilise des mélanges de chloranthraquinones qui ont été obtenus par dichloration d'un mélange nitro-anthraquinonique qui contient au moins 70% de nitro-anthraquinone, suivie d'un échange nitro-chlore.

6. Procédé suivant la revendication 4, caractérisé en ce que les mélanges de chloranthraquinones utilisés ont été obtenus par dichloration de l'acide anthraquinone-1-sulfonique, suivie d'un échange sulfochlore.